# EUROPEAN PATENT APPLICATION

(11) **EP 2 858 198 A1**
(43) Date of publication of application: **08.04.2015**
(21) Application number: 14191983.7
(22) Date of filing: 02.04.2012
(51) Int. Cl.: H02J 3/14

(54) **A home energy box for controlling the consumption of energy of a residential user**

(62) Divisional of application: 12290117.6
(71) Applicant: ALCATEL LUCENT, 92100 Boulogne-Billancourt (FR)
(72) Inventor: Rähmer, Silke, 75428 Illingen (DE); Kopp, Dieter, 75428 Illingen (DE)
(74) Representative: Sciaux, Edmond

(57) **Abstract**

The present invention concerns a home energy box (31) for controlling the consumption of energy of a residential user. The home energy box is adapted to allocate an energy consumed at the residential user (23) to tariffs corresponding to tariff information received from an energy network operator (27) and to send data on the consumed energy allocated to the tariffs from the residential user to a retailer (28).

## Description

### Field of invention

The present invention relates to the field of energy networks and, more specifically, to a home energy box.

### Background

In an energy network, there is a need of managing the demand of energy within the energy network which means to manage a balance between the generation and the consumption of energy within the energy network and there is a need of handling the energy consumption at the residential users, which are provided with energy within the energy network, in accordance with the demand managing in the energy network and of billing the energy consumed at the residential users.

Nowadays, energy demand management concepts are required which intelligently adapt the generated and the consumed energy within an energy network by in particular collecting information about both the generated and the consumed energy and furthermore by trying to influence the consumption of energy in accordance with the generated energy and inversely. In this context, the term "smart grid" is used. By smart grid is meant that the energy provider handles the energy demand by collecting information about both the generated and the consumed energy within the energy network (= grid) in order to achieve a balance between the generated and the consumed energy.

Current smart grid concepts require smart metering for the input to smart grid. Smart metering means that the energy which is consumed at the residential users can be measured remotely, in particular by the energy network operator, alias provider. This includes that the energy network operator and/or the retailer can determine from outside the residential user's home the energy consuming behaviour of the residential user in the sense that he gets detailed information about the time and the kind of the energy consuming devices like coffee machine, washing machine, TV etc. which the residential user has activated causing energy consumption. Therefore, many residential users are anxious that smart metering could spy them, at least the residential users feel their privacy not being respected and thus - and for the costs being involved with the installation of smart metering devices - the installation of smart metering technology is delayed or even discarded for the near future.
On the other hand, classical meters do not cause privacy concerns but they do not enable the energy network operator, nor the residential users, to manage the demand of energy within an energy network because they only measure the energy consumed or generated by a user during a long time period. They cannot take into account the variable cost of energy during each time period.

### Summay of the invention

The present invention aims to measure energy consumed or generated by a user, and at the same time taking into account a variable energy tariff, without sending, to the network operator and/or the retailer, detailed information about the time of use and the kind of the energy consuming devices used by each residential user.

The objective of the invention is achieved by a home energy box characterized in that it comprises:
- means for receiving tariff information from an energy network operator and /or retailer,
- and means for allocating an energy consumed at a residential user to tariffs corresponding to tariff information received from an energy network operator and/or retailer.

The home energy box according to the invention is adapted to measure energy consumed by a user and, at the same time, taking into account a variable energy tariff, without sending, to the network operator and/or the retailer, detailed information about the time of use and the kind of the energy consuming devices used by each residential user, thanks to the collaboration of the means for receiving tariff information, and the means for allocating the energy consumed to tariffs received from the energy network operator and/or retailer.

It is an advantage of the present invention to provide a smart grid network provider, this is the energy network operator in a smart grid energy network and/or the retailer in the smart grid energy network, with the information required for the smart grid concept without the installation of smart metering technology. Furthermore, it is an advantage of the present invention to enable the energy network operator to take influence on the energy consumption at the residential user, e.g. for economic and/or ecologic reasons.

In a preferred embodiment, the home energy box further comprises means for sending data, on the consumed energy allocated to the tariffs, from the residential user to the energy network operator and/or an energy retailer,

In a preferred embodiment, the home energy box further comprises means for controlling the energy consumption at the residential user based on received tariff information.

In a preferred embodiment, said means for controlling the energy consumption at the residential user based on received tariff information comprises:
- means for collecting information on the energy consumption based on previous and/or predicted energy consumption at the residential user,
- means for measuring the energy consumption at the residential user,
- and means for controlling the energy consumption at the residential user based on collected and measured data, and the received tariff information.

In a preferred embodiment, the home energy box further comprises means for providing a home automation based on the received tariff information, so that devices at the residential user are switched on if the energy price according to the received tariff information is below a certain threshold, and are switched off if the energy price according to the received tariff information is above the certain threshold.

In a preferred embodiment, the home energy box further comprises means for allocating the data of energy consumption to the tariffs in defined time intervals, and means enabling these data to be checked by a residential user.

In a preferred embodiment, it further comprises means for displaying the energy price based on the received tariff information.

In a preferred embodiment, the means for receiving tariff information from an energy network operator and/or an energy retailer comprise means for wired or wireless internet communication.

In a preferred embodiment, the means for sending data, on the consumed energy allocated to the tariffs, from the residential user to an energy network operator and/or an energy retailer comprise means for sending these data via an electronic way.

Another object of the invention is an energy meter characterized in that it comprises a home energy box according to the invention.

The objectives, features and advantages of the present invention will become more apparent from the accompanying figures and the following detailed description.

### Brief description of the figures

- Fig. 1: is a block diagram depicting the overall structure of a method of controlling the consumption of energy.
- Fig. 2: is a schematic diagram depicting a part of an energy network.
- Fig. 3: is a schematic diagram depicting a residential user's home.

### Detailed description of the figure

To get a more complete understanding of the present invention an exemplary implementation will be described in the following for illustrative reasons without restricting the scope of the patent which is defined only by the claims.

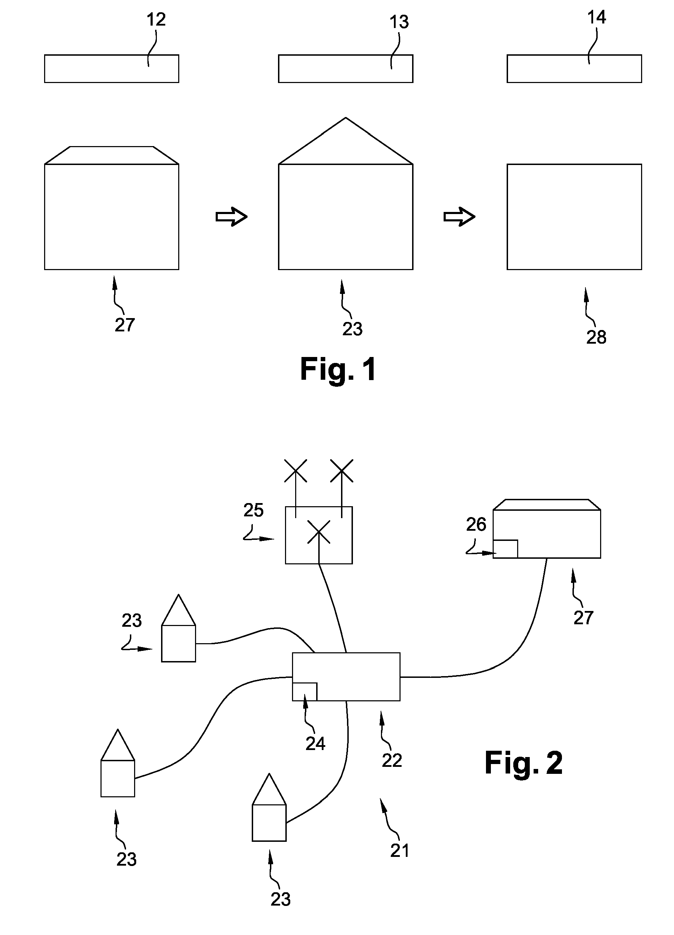

Fig. 1 depicts the overall structure of one exemplary embodiment of the present invention. Fig. 1 shows the steps 12, 13 and 14 of controlling the consumption of energy within the energy network 21, in particular of demand handling within the energy network, handling a local energy consumption and billing the local energy consumption. The network operator 27 manages the demand of energy by managing a balance between the generation and the consumption of energy within the energy network. This step (12) is depicted on the left side of fig. 1.
This is done in particular by collecting information about consumed and inserted energy and of generating tariff information, in particular an energy price, and to send the tariff information, which includes in particular flexible tariffs, to the residential user 23. At the residential user 23, the information about flexible tariffs is received from the network operator 27 and the residential user 23 controls his energy consumption in accordance with information on the energy tariffs and on further information, in particular on his energy consuming behaviour by in particular programming energy consuming devices. This step 13 is depicted in the centre of fig. 1. Finally, the energy consumed at the residential user 23 is measured and billed. The billing can be implemented by sending a post-card or in an electronic way, e.g. via an e-mail, for example to a retailer 28. This step 14 is depicted on the right side of fig. 1.

Fig. 2 shows in more detail the part of the energy network 21 comprising in particular a substation 22 and one or more residential users 23. Furthermore, as an example of an energy generating unit, a wind farm 25 is depicted. By one or more measuring units 24, of which for exemplary reasons only one is depicted, the energy consumption and/or the energy insertion at the substation 22 is measured. A substation is a part of an energy network where voltage is transformed from high to low and inverse and is in particular used to connect different energy network elements like residential users and energy generating units like wind farms or conventional energy generating units (carbon, nuclear etc.) of the energy provider of the energy network and/or of adjacent energy providers.

In fig. 2, the measuring unit 24 at the substation 22 measures the energy which is consumed within this part of the energy network, this means in particular by the residential users 23, which are supported with energy via this substation of this part of the energy network 21, and the substation 22 measures furthermore the energy which is inserted into this part of the energy network 21, e. g. by the wind farm 25. It has to be noted that also the residential users 23 as far as they are provided with photovoltaic units or with other energy generating technologies are enabled to generate energy and insert this generated energy into the energy network 21, in particular in case the energy generated by the respective residential users 23 exceeds the energy consumed by said residential users at that moment.

In the following, the measuring unit 24 sends the measuring results of the energy consumed by the residential users 23 and of the energy inserted into the energy network 21 by e.g. the wind farm 25 and/or other energy generating units to a data processing unit 26. The data processing unit 26 may be situated in particular at the energy network operator 27, such as a distribution system operator 27. The energy network operator 27 is responsible to achieve a balance between the generation and the consumption of the energy within the energy network 21. By means of the data processing unit 26 situated at the energy network operator 27, the energy network operator 27 generates a profile of the energy consumption and/or of the energy insertion. It has to be noted that the data that the energy network operator 27 receives at this stage of demand handling refers to the energy generation and consumption which is measured by the substation 22 and by further substations of the energy network equivalently, therefore the data refer to the respective part of the energy network 21 and the data is not supposed to specify the energy consumption and generation of a specific residential user 23. Thereby a personalized profile of the residential user's energy consuming behaviour which is supposed to be regarded as spying the residential user 23 by his energy consuming activities like coffee cooking, watching TV etc. is avoided. The energy network operator 27 is thus merely provided with the data of the energy consumption and generation, this is or the energy consumed and inserted at each specific substation 22 to which a plurality of residential users 23 and/or further energy consuming and/or generating units are connected. The profile, generated on the basis of these measurements at the substation(s), may in particular indicate time periods of high energy consumption and time periods of low energy consumption and also time periods of high energy generation and time periods of low energy generation. By these data, the profile may indicate time periods when the generated energy is supposed to exceed the consumed energy and time periods during which there is the possibility that the energy which is requested by the energy consuming elements of the energy network 21 such as the energy consuming devices at the residential users 23 may exceed the energy which is expected to be generated during said time period which may cause the need for further energy insertion by e.g. the activation of more energy generating elements or by transmitting energy from other elements of the energy network 21 or from outside the energy network 21 and thus from another energy network, this means from energy generating elements at least from outside the considered network part of the energy network 21.

To achieve a balance between the energy consumption and the energy generation, the energy consuming behaviour of the residential users 23 may be influenced, in particular to guide the residential users 23 to an energy sensitive behaviour. In particular during time periods when the requested energy according to energy consumption at the residential users 23 risks to exceed the energy generated by the energy generating elements which are supposed to insert energy into the energy network the energy network operator 27 will try to influence the residential users 23 to consume less energy. In contrast, during time periods when in particular the alternative energy generating elements such as wind farms 25 or photovoltaic elements which are dependent on factors like sun shine or wind strength generate much energy, the energy network operator 27 may try to influence the residential users 23 to request energy during said time periods, with other words to schedule the residential users' energy consumption to these time periods of high energy generation. For example the residential users 23 may be influenced to activate less time sensitive energy consuming devices or applications like washing by means of washing machines, refilling the batteries of electrical cars, if possible, etc. during time periods of high energy generation.

Therefore, the energy network operator 27 may generate flexible tariffs and transmit the tariff information in accordance with the generated flexible tariffs to the residential users 23. The energy network operator 27 may in particular generate the flexible tariffs according to the generated profile by comparing the measured consumed and inserted energy. For time periods during which the generated energy exceeds the consumed energy namely within the considered network part of the energy network 21, in particular exceeds by far the consumed energy, wherein the current and/or predicted energy generation and consumption may be considered, the energy price is low. For time periods during which the residential users 23 request much energy and the energy consumption risks to exceed the generation of energy in this part of the energy network 21 so that energy must be inserted from other network elements outside this energy network part 21 and/or the energy generation has to be augmented, the energy network operator 27 might set the energy price to a high level to influence the residential uses 23 to use less energy during this time period. Consequently the energy network operator 27 transmits the tariff information about the generated flexible tariffs to the residential users 23.

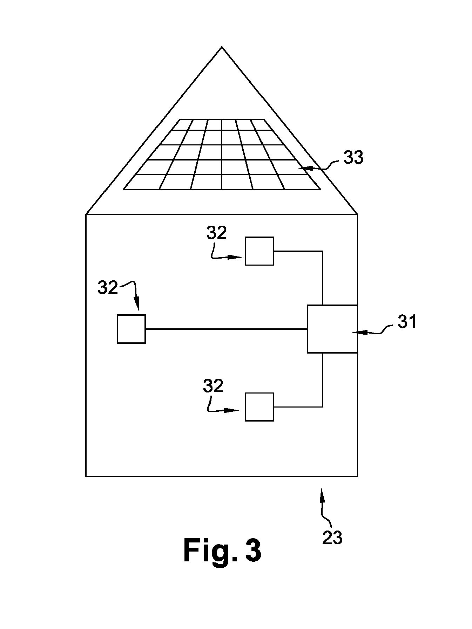

In particular, the tariff and/or control information may be transmitted via a communication network to a communication unit 31 of the respective residential users 23, in particular using wired or wireless internet communication, preferably DSL or RF, or ripple control technology, in particular via web services like e-mail and/or apps (applications). Each residential user 23 may be provided by such kind of communication unit 31. The communication unit 31 of the respective residential user 23 may be one of the functions or parts of an electronic meter and/or home energy box. The communication unit 31 is depicted for exemplary reasons in fig. 3 as part of such an electronic meter and/or home energy box which implements further functions as will be described in the following. The communication unit may be implemented by a separate device in other embodiments.

Fig. 3 shows in more detail one of the residential users 23, and in particular an electronic meter and/or home energy box 31 for local energy processing. Additionally energy consuming devices 32 are depicted such as washing machine, television, coffee machine, computer or any other energy consuming device, household appliance, communication device and other. The function of an electronic meter and/or home energy box 31 may be implemented by a single physical device or may be implemented by two or more physical devices and may also include the function of the communication unit of the communication network over which the residential user receives tariff and/or control information from the energy network operator 27 and/or retailer 28. The electronic meter and/or home energy box 31 is designed to measure the energy consumption of the energy consuming devices and/or of the energy generated by the residential user 23 in case the residential user 23 has energy generating means as photovoltaic elements 33 as depicted for exemplary reasons in fig. 3. The photovoltaic elements 33 or other energy generating units of the residential user 23 may insert the generated energy into the energy network 21 and/or insert the generated energy into the local energy circuits of the residential users 23. Furthermore the energy meter and/or home energy box 31 is designed to control the energy consumption at the residential user 23. By this, the electronic meter and/or home energy box 31 may be used for local energy processing.

In a preferred embodiment, the electronic meter and/or home energy box 31, receives tariff information form the energy network operator 27. Furthermore, in the exemplary example depicted in fig. 3, the electronic meter and/or home energy box 31 is used to collect information on the energy consumption based on previous and/or predicted energy consumption at the residential user 23, measure the energy consumption and/or generation at the residential user 23 and control the energy consumption at the residential user 23 based on the collected and measured data and the received tariff information. In particular, the electronic meter and/or home energy box 31 displays the energy price based on the received tariff information. A current and/or an accumulated value of the energy price can be displayed. The tariff information comprises preferably time or volume based tariffs. As already mentioned, one objective of flexible tariffs is to stimulate the residential user 23 to energy sensitive behaviour, this means to consume less energy during time periods of low energy production within the energy network 21 and to schedule his energy consumption during time periods of high energy production within the energy network 21.

In particular, the energy consumption at the residential user 23 is handled by providing a home automation based on the received tariff information and collected information on the energy consumption and/or energy generation at the residential user 23. For example, devices 32 at the residential user 23 are switched on, if the energy price according to the received tariff information is below a certain threshold, and devices at the residential user 23 are switched off, if the energy price according to the received tariff information is above a certain threshold. This means that the tariff information is used correspondingly also to control the energy consumption at the residential users 23 and therefore within energy network. By this implementation, the energy network operator, based on his knowledge of the measuring results of energy consumption and generation and energy insertion within the energy network 21, may control the energy consumption at the residential users 23 via the tariff, in particular the energy price. Therefore the method of controlling the energy consumption is implemented in an impersonalized way from the energy network operator's point of view avoiding the necessity of smart metering and the above mentioned disadvantages as spying and costs.

In particular, the local energy consumption may be controlled at and by the residential user's home - based on the received tariff information and collected further information as mentioned above - by programming devices 32 at the residential user 23 so that the devices 32 are switched on during time periods of low tariffs and the devices 32 are switched off during time periods of high tariffs. In a preferred embodiment, the data of energy consumption is allocated to the tariffs in defined time intervals in the electronic meter and/or home energy box 31 at the residential user 23, and wherein the data could be checked by the residential user 23.

In particular, the energy consumed at the residential user 23 may be billed by measuring the energy consumption at the residential user 23, allocating the consumed energy to tariffs corresponding to tariff information received from the energy network operator 27 and send data on the consumed energy allocated to the tariffs from the residential user 23 to a retailer 28. In an exemplary embodiment, the data on the consumed energy allocated to the tariffs is sent from the residential user 23 to the retailer 28 once per month or once per year and wherein the data is sent in an electronic way or via a postcard.

## Claims

**1.** A home energy box (31) **characterized in that** it comprises:
- means for receiving tariff information from an energy network operator and/or an energy retailer (27, 28),
- and means for allocating an energy consumed at a residential user (23) to tariffs corresponding to tariff information received from an energy network operator and/or an energy retailer (27, 28).

**2.** The home energy box (31) according to claim 1, further comprising means for sending data, on the consumed energy allocated to the tariffs, from the residential user (23) to the energy network operator and/or an energy retailer (27, 28),

**3.** The home energy box (31) according to claim 1, further comprising means for controlling the energy consumption at the residential user (23) based on received tariff information.

**4.** The home energy box (31) according to claim 3, wherein said means for controlling the energy consumption at the residential user (23) based on received tariff information comprises:
- means for collecting information on the energy consumption based on previous and/or predicted energy consumption at the residential user (23),
- means for measuring the energy consumption at the residential user (23,
- and means for controlling the energy consumption at the residential user (23) based on collected and measured data, and the received tariff information.

**5.** The home energy box (31) according to claim 1 further comprising means for providing a home automation based on the received tariff information, so that devices (32) at the residential user (23) are switched on if the energy price according to the received tariff information is below a certain threshold, and are switched off if the energy price according to the received tariff information is above the certain threshold.

**7.** The home energy box (31) according to claim 1 further comprising means for allocating the data of energy consumption to the tariffs in defined time intervals, and means enabling these data to be checked by a residential user (23).

**8.** The home energy box (31) according to claim 1, further comprising means for displaying the energy price based on the received tariff information.

**9.** The home energy box (31) according to claim 1, wherein the means for receiving tariff information from an energy network operator and/or an energy retailer (27, 28), comprise means for wired or wireless internet communication.

**10.** The home energy box (31) according to claim 2, wherein the means for sending data, on the consumed energy allocated to the tariffs, from the residential user (23) to an energy network operator and/or an energy retailer (27, 28), comprises means for sending these data via an electronic way.

**11.** Energy meter **characterized in that** it comprises a home energy box (31) according to one of the preceding claims.
